(19) **Europäisches Patentamt / European Patent Office / Office européen des brevets**

(11) **EP 4 574 768 A1**

(12) **EUROPEAN PATENT APPLICATION**
published in accordance with Art. 153(4) EPC

(43) Date of publication:
**25.06.2025 Bulletin 2025/26**

(21) Application number: **23855134.5**

(22) Date of filing: **16.08.2023**

(51) International Patent Classification (IPC):
*C01G 53/00* (2025.01)     *H01M 4/505* (2010.01)
*H01M 4/525* (2010.01)     *H01M 4/02* (2006.01)

(52) Cooperative Patent Classification (CPC):
**C01G 53/00; H01M 4/02; H01M 4/505; H01M 4/525;**
Y02E 60/10

(86) International application number:
**PCT/KR2023/012070**

(87) International publication number:
**WO 2024/039167 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.08.2022 KR 20220102058**

(71) Applicant: **Posco Future M Co., Ltd**
**Pohang-si, Gyeongsangbuk-do 37918 (KR)**

(72) Inventors:
• **CHOI, Seung Un**
  **Gumi-si, Gyeongsangbuk-do 39460 (KR)**
• **NAM, Gyeong Won**
  **Gumi-si, Gyeongsangbuk-do 39184 (KR)**
• **JUNG, Kwang Eun**
  **Gumi-si, Gyeongsangbuk-do 39180 (KR)**
• **JEUNG, Do Gak**
  **Gumi-si, Gyeongsangbuk-do 39172 (KR)**
• **KIM, Jeong Han**
  **Gumi-si, Gyeongsangbuk-do 39171 (KR)**
• **LEE, Chang Hyun**
  **Gumi-si, Gyeongsangbuk-do 39172 (KR)**

(74) Representative: **Meissner Bolte Partnerschaft mbB**
**Patentanwälte Rechtsanwälte**
**Postfach 86 06 24**
**81633 München (DE)**

(54) **PRECURSOR FOR POSITIVE ELECTRODE ACTIVE MATERIAL FOR LITHIUM SECONDARY BATTERY, POSITIVE ELECTRODE ACTIVE MATERIAL INCLUDING SAME, AND METHOD FOR MANUFACTURING POSITIVE ACTIVE MATERIAL**

(57)    The present disclosure relates to a positive electrode active material precursor for a lithium secondary battery, a positive electrode active material for a lithium secondary battery, and a method of producing a positive electrode material, and the positive electrode active material precursor for a lithium secondary battery may satisfy, in XRD peak values, at least one of an $I_{001}/I_{100}$ ratio of 0.5 to 6, an $I_{001}/I_{101}$ ratio of 0.6 to 3, an $I_{001}/I_{102}$ ratio of 2.5 to 8, an $I_{001}/I_{110}$ ratio of 1.5 to 11, an $I_{001}/I_{111}$ ratio of 2 to 14, an $I_{100}/I_{001}$ ratio of 0.1 to 3.1, an $I_{100}/I_{101}$ ratio of 0.1 to 1.5, an $I_{100}/I_{102}$ ratio of 1.0 to 7.3, an $I_{100}/I_{110}$ ratio of 1.5 to 3.2, and an $I_{100}/I_{111}$ ratio of 2.5 to 5.3.

【Figure 1A】

## Description

### [Technical Field]

The present disclosure relates to a secondary battery, and more particularly, to a positive electrode active material precursor for a lithium secondary battery, a positive electrode active material for a lithium secondary battery including the same, and a method of producing the same.

### [Background Art]

In general, a lithium secondary battery includes a positive electrode including a positive electrode active material, a negative electrode including a negative electrode active material, a separator, and an electrolyte, in which charging and discharging are performed by intercalation and deintercalation of lithium ions. The lithium secondary battery has advantages of a high energy density, a high electromotive force, and a high capacity, and thus has been applied to various fields.

In addition, improvement of high-temperature performance, such as high-temperature storage characteristics and high-temperature cycle characteristics, is an important object in the lithium secondary battery. For example, when a total internal pore volume is high after applying the positive electrode active material to a current collector and performing rolling, the high-temperature performance of the positive electrode is likely to be degraded. Therefore, there is a need for improving high-temperature characteristics in developing a positive electrode material for a lithium secondary battery such as a rapid charging secondary battery by minimizing changes in electrode structure and total internal pore volume that occur during electrode rolling.

In addition, in accordance with increases in technology development and demand for mobile devices, a demand for a secondary battery as an energy source has rapidly increased. Among these secondary batteries, lithium secondary batteries that exhibit high energy density and operating potential and have a long cycle lifespan and a low self-discharge rate have been commercialized and widely used.

In addition, in accordance with an increase in interest in environmental issues, an interest in electric vehicles and hybrid electric vehicles that may replace vehicles using fossil fuels, such as gasoline vehicles and diesel vehicles, which are one of the main causes of air pollution, has increased. Studies for using a lithium secondary battery as a power source for the electric vehicles and hybrid electric vehicles have been actively conducted.

In accordance with increases in technology development and demand for an electric vehicle, a demand for a lithium secondary battery as an energy source for a large-scale battery has rapidly increased. An interest in a lithium nickel cobalt manganese composite oxide as a positive electrode active material for a lithium secondary battery has rapidly increased, and in the composite oxide, in particular, cobalt plays an important role in providing a positive electrode active material having a high operating voltage and excellent efficiency characteristics.

However, cobalt has limitations in its mass use in power sources such as electric vehicles because it is expensive, and as the price of cobalt has recently risen rapidly and the content of cobalt has gradually been decreasing, solutions have been required to complement the stability and lifespan of the positive electrode active material.

In addition, as another method for improving the stability of the positive electrode active material, a lithium transition metal oxide having a concentration gradient in which a concentration of transition metal components gradually changes from the surface to the inside of the positive electrode active material has been proposed. However, in the case of the lithium transition metal oxide having a concentration gradient, internal cracks of particles that occur during a charging and discharging process cannot be completely controlled, and a complex process is used to implement this, which requires high processing costs and makes it difficult to control the quality.

### [Disclosure]

### [Technical Problem]

The present disclosure has been made in an effort to provide a positive electrode active material precursor having advantages of having low processing costs and easy quality control in processing of a positive electrode active material and producing a positive electrode active material having improved stability and lifespan characteristics by controlling internal cracks of particles that occur during a charging and discharging process.

The present disclosure has also been made in an effort to provide a positive electrode active material including the positive electrode active material precursor having the advantages described above.

The present disclosure has also been made in an effort to provide a method of producing a positive electrode active material having the advantages described above.

**[Technical Solution]**

An exemplary embodiment of the present invention provides a positive electrode active material precursor, wherein the positive electrode active material precursor satisfies, in XRD peak values, at least one of an $I_{001}/I_{100}$ ratio of 0.5 to 6, an $I_{001}/I_{101}$ ratio of 0.6 to 3, an $I_{001}/I_{102}$ ratio of 2.5 to 8, an $I_{001}/I_{110}$ ratio of 1.5 to 11, an $I_{001}/I_{111}$ ratio of 2 to 14, an $I_{100}/I_{001}$ ratio of 0.1 to 3.1, an $I_{100}/I_{101}$ ratio of 0.1 to 1.5, an $I_{100}/I_{102}$ ratio of 1.0 to 7.3, an $I_{100}/I_{110}$ ratio of 1.5 to 3.2, and an $I_{100}/I_{111}$ ratio of 2.5 to 5.3. In an exemplary embodiment, the positive electrode active material precursor may satisfy at least one of a full width at half maximum of a diffraction peak on a (001) plane of 0.1 to 3.0, a full width at half maximum of a diffraction peak on a (100) plane of 0.1 to 2.8, a full width at half maximum of a diffraction peak on a (101) plane of 0.36 to 1.0, a full width at half maximum of a diffraction peak on a (102) plane of 0.1 to 2.0, and a full width at half maximum of a diffraction peak on a (110) plane of 0.1 to 3.0.

In an exemplary embodiment, the positive electrode active material precursor may have a structure in which at least one or more layers of a transition metal layer and an oxygen layer are stacked. In another exemplary embodiment, the positive electrode active material precursor may include at least one or more primary particles, and a lattice constant value of a c-axis of the primary particle may be 300 nm to 700 nm.

Another exemplary embodiment of the present invention provides a positive electrode active material including at least one or more positive electrode active material precursors having hydrogen bonds in a <001> direction, wherein the positive electrode active material is a single particle containing, by wt%, 500 to 2,000 ppm of $Li_2CO_3$. In an exemplary embodiment, the positive electrode active material may contain LiOH, and LiOH and $Li_2CO_3$ may satisfy the following Expression 1:

<Expression 1>

$$0.5 \leq [LiOH]/[Li_2CO_3] \leq 1.9$$

wherein [LiOH] represents a content of LiOH and [$Li_2CO_3$] represents a content of $Li_2CO_3$.

In an exemplary embodiment, LiOH may be contained in an amount of 1,000 to 4,000 ppm in terms of wt%. In an exemplary embodiment, an average particle diameter (D50) of the positive electrode active material may be 2 to 20 $\mu$m.

In an exemplary embodiment, a specific surface area of the positive electrode active material may be 1 to 30 $m^2$/g. In an exemplary embodiment, the positive electrode active material may be a lithium-nickel composite oxide represented by the following Chemical Formula 1:

<Chemical Formula 1>      $Li_x[Ni_yCo_zMn_wM_v]O_2$

wherein M is one or more selected from Ba, Ca, Zr, Ti, Mg, Ta, Nb, and Mo, $0.9 < x < 1.2$, $0.8 < y < 1$, $0 < z < 0.8$, $0 < w < 0.05$, and $0 \leq v \leq 0.2$.

Yet another exemplary embodiment of the present invention provides a method of producing a positive electrode active material, the method including: injecting an aqueous solution containing a sodium or potassium-based material to form initial reaction conditions in a reactor; injecting a metal salt aqueous solution containing at least one or more of nickel, cobalt, and manganese, a complex ion forming agent, and a pH adjuster into the reactor to prepare a reaction solution; filtering the reaction solution to prepare a metal composite hydroxide; mixing the metal composite hydroxide and a lithium raw material to prepare a positive electrode active material precursor; and sintering the positive electrode active material precursor, wherein the aqueous solution containing the sodium or potassium-based material may contain the sodium or potassium-based material in an amount of 5 to 10 parts by weight with respect to 100 parts by weight of water.

In an exemplary embodiment, the sodium or potassium-based material may include at least one of sodium sulfate, sodium chlorate, potassium chlorate, and potassium sulfate. In an exemplary embodiment, in the injecting of the metal salt aqueous solution containing at least one or more of nickel, cobalt, and manganese, the complex ion forming agent, and the pH adjuster into the reactor, a ratio of a flow rate of ammonia water to a flow rate of the metal salt aqueous solution may be 0.06 to 0.3.

In an exemplary embodiment, the flow rate of the metal salt aqueous solution may be 2.5 to 3.5 L/hr. In an exemplary embodiment, the sintering may be performed at 750 to 1,100°C. In an exemplary embodiment, the sintering may be performed for 5 to 30 hours. In an exemplary embodiment, in the injecting of the metal salt aqueous solution containing at least one or more of nickel, cobalt, and manganese, the complex ion forming agent, and the pH adjuster into the reactor, a pH in the reactor may be controlled to 10 to 12.

**[Advantageous Effects]**

According to an exemplary embodiment of the present disclosure, there is provided a positive electrode active material precursor grown by forming hydrogen bonds in a <001> direction.

According to another exemplary embodiment of the present disclosure, there is provided a positive electrode active material that has improved stability and lifespan characteristics and has a content of residual $Li_2CO_3$ limited to a certain range because cracks occurring at polycrystalline boundaries are reduced as a single particle containing the precursor having the advantages described above is formed.

According to still another exemplary embodiment of the present disclosure, there is provided a method of producing a positive electrode active material having the advantages described above by controlling a content of a complex ion forming agent.

**[Description of the Drawings]**

FIGS. 1A to 1C illustrate SEM photographs of positive electrode active material precursors according to examples and comparative examples of the present disclosure.

FIG. 2 illustrates XRD peak intensity values according to examples and comparative examples of the present disclosure.

FIGS. 3A to 3C illustrate SEM photographs obtained by imaging positive electrode active materials for a lithium secondary battery according to examples and comparative examples of the present disclosure.

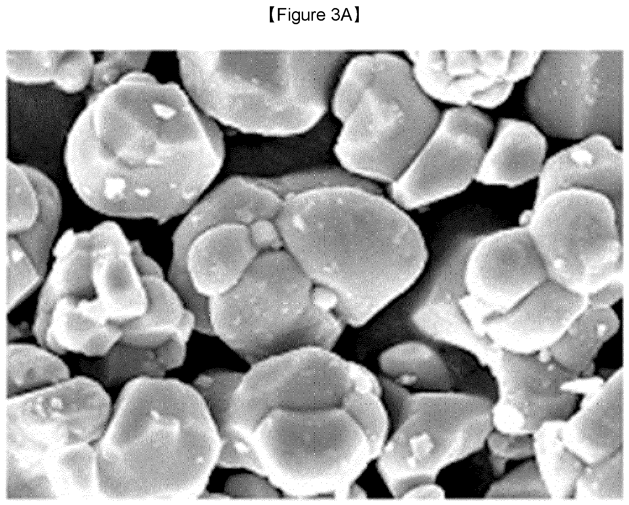

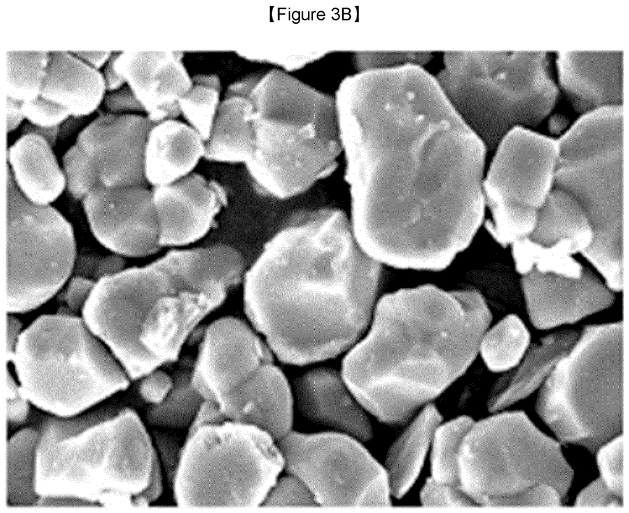

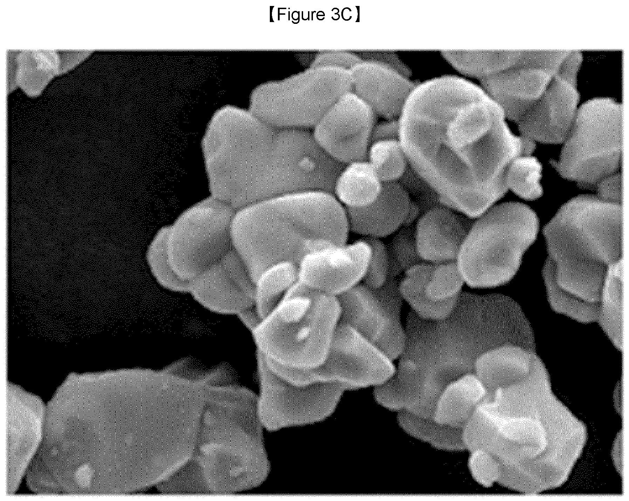

FIG. 3A and 3B are graphs showing capacity characteristics and lifespan characteristics of the positive electrode active materials for a lithium secondary battery according to examples and comparative examples of the present disclosure.

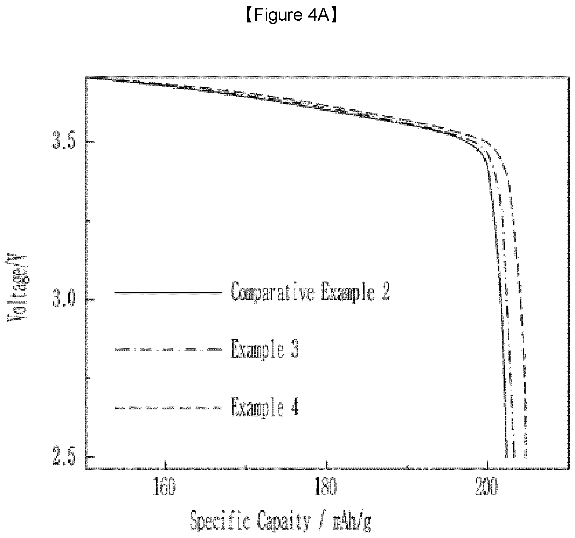

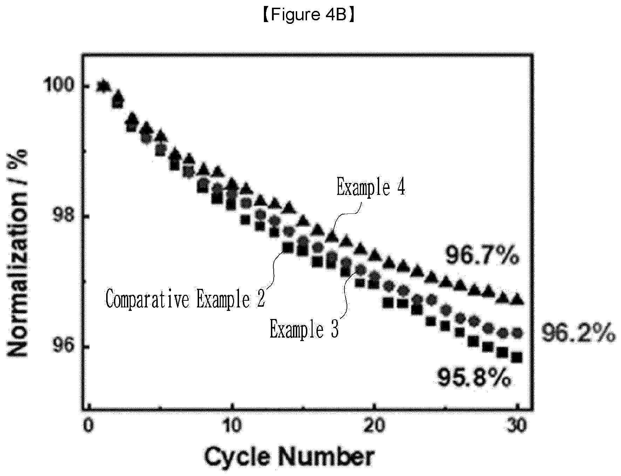

FIG. 4A and 4B are graphs showing capacity characteristics and lifespan characteristics of the positive electrode active materials for a lithium secondary battery according to examples and comparative examples of the present disclosure.

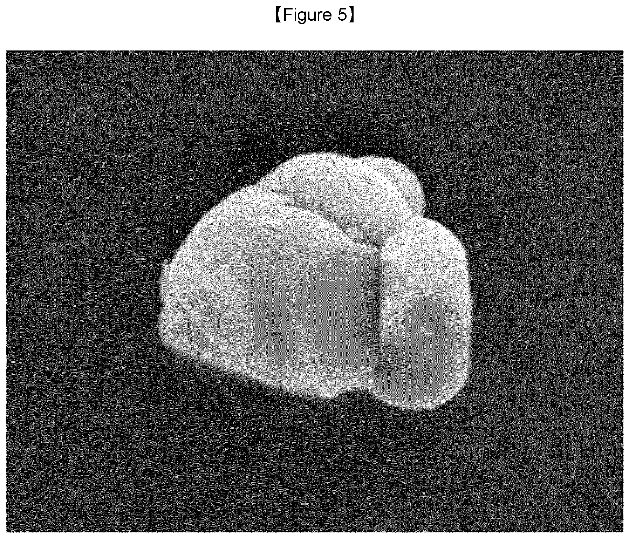

FIG. 5 illustrates an SEM photograph of an active material precursor for a lithium secondary battery prepared by adding ammonium sulfate in a comparative example of the present disclosure.

**[Mode for Invention]**

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present disclosure.

Terminologies used herein are to mention only a specific exemplary embodiment, and are not to limit the present disclosure. Singular forms used herein include plural forms as long as phrases do not clearly indicate an opposite meaning. The term "comprising" used in the specification concretely indicates specific properties, regions, integers, steps, operations, elements, and/or components, and is not to exclude the presence or addition of other specific properties, regions, integers, steps, operations, elements, and/or components.

When any part is positioned "on" or "above" another part, it means that the part may be directly on or above the other part or another part may be interposed therebetween. In contrast, when any part is positioned "directly on" another part, it means that there is no part interposed therebetween.

Unless defined otherwise, all terms including technical terms and scientific terms used herein have the same meanings as understood by those skilled in the art to which the present disclosure pertains. Terms defined in a generally used dictionary are additionally interpreted as having the meanings matched to the related technical document and the currently disclosed contents, and are not interpreted as ideal or very formal meanings unless otherwise defined.

Hereinafter, exemplary embodiments of the present disclosure will be described in detail. However, these exemplary embodiments are provided as examples, and the present disclosure is not limited by these exemplary embodiments and is defined by only the scope of the claims to be described below.

According to an exemplary embodiment of the present disclosure, a positive electrode active material precursor for a lithium secondary battery may satisfy, in XRD peak values, at least one of an $I_{001}/I_{100}$ ratio of 0.5 to 6, an $I_{001}/I_{101}$ ratio of 0.6 to 3, an $I_{001}/I_{102}$ ratio of 2.5 to 8, an $I_{001}/I_{110}$ ratio of 1.5 to 11, an $I_{001}/I_{111}$ ratio of 2 to 14, an $I_{100}/I_{001}$ ratio of 0.1 to 3.1, an $I_{100}/I_{101}$ ratio of 0.1 to 1.5, an $I_{100}/I_{102}$ ratio of 1.0 to 7.3, an $I_{100}/I_{110}$ ratio of 1.5 to 3.2, and an $I_{100}/I_{111}$ ratio of 2.5 to 5.3. Specifically, $I_{001}$ may be a peak value satisfying a range of $18.5 \pm 1.0°$ in the XRD peak values. More specifically, $I_{001}$ may

refer to a C-axis growth precursor grown by forming hydrogen bonds.

$I_{100}$ may be a peak value satisfying a range of $33.0 \pm 1.0°$ in the XRD peak values, and $I_{101}$ may be a peak value satisfying a range of $38.5 \pm 1.5°$ in the XRD peak values, which may refer to a peak value of an A-axis growth precursor.

$I_{102}$ may be a peak value satisfying a range of $52.5 \pm 1.5°$ in the XRD peak values, $I_{110}$ may be a peak value satisfying a range of $59 \pm 1.5°$ in the XRD peak values, and $I_{111}$ may be a peak value satisfying a range of $63 \pm 1.0°$ in the XRD peak values.

The $I_{001}/I_{100}$ ratio is one of the indicators for determining a precursor grown by forming hydrogen bonds in a 001 direction, and a higher $I_{001}/I_{100}$ ratio indicates a precursor grown by forming hydrogen bonds in the 001 direction. The $I_{001}/I_{100}$ ratio may be 0.5 to 6. Specifically, the $I_{001}/I_{100}$ ratio may be 2 to 6. More specifically, the $I_{001}/I_{100}$ ratio may be 2.3 to 4.4.

When the $I_{001}/I_{100}$ ratio satisfies the range described above, a single particle of the positive electrode active material may be obtained according to precursor sintering. When the ratio exceeds the upper limit value, there is a problem with capacity when applied to a battery, and when the ratio exceeds the lower limit value, there is a problem with difficulty in forming a single particle of the positive electrode active material.

The $I_{001}/I_{101}$ ratio is one of the indicators for determining a precursor grown by forming hydrogen bonds in the 001 direction, and a higher $I_{001}/I_{101}$ ratio indicates a precursor grown by forming hydrogen bonds in the 001 direction. The $I_{001}/I_{101}$ ratio may be 0.6 to 3. Specifically, the $I_{001}/I_{101}$ ratio may be 1.5 to 3. More specifically, the $I_{001}/I_{101}$ ratio may be 1.5 to 1.8.

When the $I_{001}/I_{101}$ ratio satisfies the range described above, cracks occurring at polycrystalline boundaries are reduced, such that stability and lifespan characteristics are improved, and a content of residual $Li_2CO_3$ is limited. When the ratio exceeds the upper limit value, there is a problem with capacity when applied to a battery, and when the ratio exceeds the lower limit value, there is a problem that the size of the primary particle decreases and the boundary of the crystal plane increases, resulting in an increase in cracks.

The $I_{001}/I_{102}$ ratio is one of the indicators for determining a precursor grown by forming hydrogen bonds in the 001 direction, and a higher $I_{001}/I_{102}$ ratio indicates a precursor grown by forming hydrogen bonds in the 001 direction. The $I_{001}/I_{102}$ ratio may be 2.5 to 8. Specifically, the $I_{001}/I_{102}$ ratio may be 4.9 to 6.7.

When the $I_{001}/I_{102}$ ratio satisfies the range described above, a single particle of the positive electrode active material may be obtained according to precursor sintering. When the ratio exceeds the upper limit value, there is a problem with capacity when applied to a battery, and when the ratio exceeds the lower limit value, there is a problem with difficulty in forming a single particle of the positive electrode active material.

The $I_{001}/I_{110}$ ratio is one of the indicators for determining a precursor grown by forming hydrogen bonds in the 001 direction, and a higher $I_{001}/I_{110}$ ratio indicates a precursor grown by forming hydrogen bonds in the 001 direction. The $I_{001}/I_{110}$ ratio may be 1.5 to 11. Specifically, the $I_{001}/I_{110}$ ratio may be 4.0 to 10.5. More specifically, the $I_{001}/I_{110}$ ratio may be 4.2 to 10.3.

When the $I_{001}/I_{110}$ ratio satisfies the range described above, a single particle of the positive electrode active material may be obtained according to precursor sintering. When the ratio exceeds the upper limit value, there is a problem with capacity when applied to a battery, and when the ratio exceeds the lower limit value, there is a problem with difficulty in forming a single particle of the positive electrode active material.

The $I_{001}/I_{111}$ ratio is one of the indicators for determining a precursor grown by forming hydrogen bonds in the 001 direction, and a higher $I_{001}/I_{111}$ ratio indicates a precursor grown by forming hydrogen bonds in the 001 direction. The $I_{001}/I_{111}$ ratio may be 2 to 14. Specifically, the $I_{001}/I_{111}$ ratio may be 7.0 to 13.5. More specifically, the $I_{001}/I_{111}$ ratio may be 7.4 to 13.0.

When the $I_{001}/I_{111}$ ratio satisfies the range described above, a single particle of the positive electrode active material may be obtained according to precursor sintering. When the ratio exceeds the upper limit value, there is a problem with capacity when applied to a battery, and when the ratio exceeds the lower limit value, there is a problem with difficulty in forming a single particle of the positive electrode active material.

In an exemplary embodiment, the $I_{100}/I_{001}$ ratio may satisfy 0.1 to 3.1. Specifically, the $I_{100}/I_{001}$ ratio may satisfy 0.23 to 0.44. The $I_{100}/I_{101}$ ratio may satisfy 0.1 to 1.5. Specifically, the $I_{100}/I_{101}$ ratio may satisfy 0.34 to 0.78.

In an exemplary embodiment, the $I_{100}/I_{102}$ ratio may satisfy 1.0 to 7.3. Specifically, the $I_{100}/I_{102}$ ratio may satisfy 1.13 to 2.95. In an exemplary embodiment, the $I_{100}/I_{110}$ ratio may satisfy 1.5 to 3.2. Specifically, the $I_{100}/I_{110}$ ratio may satisfy 1.83 to 2.37. In an exemplary embodiment, the $I_{100}/I_{111}$ ratio may satisfy 2.5 to 5.3. Specifically, the $I_{100}/I_{111}$ ratio may satisfy 2.98 to 3.28. When the $I_{100}/I_{001}$ ratio, the $I_{100}/I_{101}$ ratio, the $I_{100}/I_{102}$ ratio, the $I_{100}/I_{110}$ ratio, or the $I_{100}/I_{111}$ ratio satisfies the range described above, a single particle is easily obtained in producing a positive electrode active material.

In an exemplary embodiment, the positive electrode active material precursor may satisfy at least one of a full width at half maximum (FWHM) of a diffraction peak on a (001) plane of 0.1 to 3.0, a full width at half maximum of a diffraction peak on a (100) plane of 0.1 to 2.8, a full width at half maximum of a diffraction peak on a (101) plane of 0.36 to 1.0, a full width at half maximum of a diffraction peak on a (102) plane of 0.1 to 2.0, and a full width at half maximum of a diffraction peak on a (110) plane of 0.1 to 3.0.

Specifically, the full width at half maximum (FWHM) may satisfy at least one of a full width at half maximum of a diffraction peak on a (001) plane of 0.27 to 0.42, a full width at half maximum of a diffraction peak on a (100) plane of 0.21 to 0.34, a full width at half maximum of a diffraction peak on a (101) plane of 0.37 to 0.55, a full width at half maximum of a diffraction peak on a (102) plane of 0.56 to 1.03, and a full width at half maximum of a diffraction peak on a (110) plane of 0.33 to 0.66.

In an exemplary embodiment, the positive electrode active material precursor may have a structure in which at least one or more layers of a transition metal layer and an oxygen layer are stacked. The transition metal layer may be formed of nickel, cobalt, manganese, or a mixture thereof. The transition metal layer may be stacked through hydrogen bonds with the oxygen layer to form a dense aggregate. The dense aggregate plays a role in advantageously forming a single particle during a sintering process in a process of producing a positive electrode active material described below.

In an exemplary embodiment, the positive electrode active material precursor may include at least one or more primary particles, and the primary particle may have a c-axis value of 300 nm to 700 nm. Specifically, as the positive electrode active material precursor reduces the dissolution of the transition metal layer and the electrostatic repulsion of the (001) plane, the primary particles constituting the positive electrode active material precursor may be formed thick and large, such that a single particle may be synthesized even at a relatively low temperature during the synthesis of the positive electrode active material.

In an exemplary embodiment, a Span value ((D90-D10)/D50), which is a difference ratio between a D90 particle diameter and a D10 particle diameter to a D50 particle diameter of the positive electrode active material precursor may satisfy a range of 0.55 to 0.75. Specifically, the Span value may satisfy a range of 0.55 to 0.70, and more specifically, a range of 0.61 to 0.67.

The D10, D50, and D90 particle diameters refer to the particle sizes when precursor particles having various particle sizes are accumulated to 10%, 50%, and 90%, respectively, in terms of volume ratio. In a case where the Span value exceeds the upper limit value of the above range, when applied to a battery, the total specific surface area increases due to differentiation, resulting in a decrease in initial charge and discharge efficiency. When the Span value exceeds the lower limit value of the above range, a production yield for industrially processing powder having a significantly small particle diameter deviation decreases significantly, resulting in an increase in costs.

In another exemplary embodiment of the present disclosure, the positive electrode active material for a lithium secondary battery may be formed by sintering at least one or more positive electrode active material precursors having hydrogen bonds in the <001> direction. For a detailed description of the positive electrode active material precursor, reference may be made to the above description to the extent that it is not contradictory.

In an exemplary embodiment, the positive electrode active material for a lithium secondary battery may be a single particle containing, by wt%, 500 to 2,000 ppm of $Li_2CO_3$. Specifically, the content of $Li_2CO_3$ may be 800 to 1,800 ppm. When the content of $Li_2CO_3$ is within the above range, residual lithium is reduced. When the content range of $Li_2CO_3$ exceeds the upper limit value, lifespan characteristics are deteriorated and instability increases.

The single particle means a positive electrode active material in which the entire primary particles are single-crystallized and there is no distinction between the primary particle, which is the primary structure of the single particle, and the secondary particle, which is an aggregate in which a plurality of primary particles are aggregated by physical or chemical bonding between the primary particles. As the positive electrode active material for a lithium secondary battery has the single particle shape, cracks occurring at polycrystalline boundaries are reduced, such that a positive electrode active material having excellent stability and lifespan characteristics may be provided.

In an exemplary embodiment, the positive electrode active material for a lithium secondary battery may contain LiOH and may satisfy the following Expression 1:

<Expression 1>

$$0.5 \le [LiOH]/[Li_2CO_3] \le 1.9$$

wherein [LiOH] represents a content of LiOH and $[Li_2CO_3]$ represents a content of $Li_2CO_3$.

Expression 1 may satisfy a range of 0.5 to 1.9. Specifically, Expression 1 may satisfy a range of 1.1 to 1.75.

When a ratio of the content of lithium hydroxide (LiOH) to the content of lithium carbonate ($Li_2CO_3$) satisfies the above range, the resistance of the active material is reduced, and the stability and lifespan characteristics are improved. When the range of Expression 1 exceeds the upper limit value of the above range, instability increases, and the lifespan characteristics are deteriorated.

In an exemplary embodiment, LiOH may be contained in an amount of 1,000 to 4,000 ppm in terms of wt%. Specifically, LiOH may be contained in an amount of 1,400 to 2,000 ppm in terms of wt%. When the content of LiOH is within the above range, residual LiOH is limited, and gas generation is reduced. When the content of LiOH exceeds the upper limit value, instability increases due to an increase in gas generation.

In an exemplary embodiment, an average particle diameter (D50) of the positive electrode active material for a lithium secondary battery may be 2.0 to 20 $\mu$m. Specifically, the average particle diameter (D50) may be 3.6 to 4.4 $\mu$m. More specifically, the average particle diameter (D50) may be 3.80 to 4.06 $\mu$m.

When the average particle diameter (D50) exceeds the upper limit value, the total internal pores after rolling are increased. When the average particle diameter (D50) exceeds the lower limit value, there is a stability problem.

In an exemplary embodiment, a specific surface area of the positive electrode active material for a lithium secondary battery may be 1 to 30 $m^2$/g. Specifically, the specific surface area may be 5 to 10 $m^2$/g.

When the specific surface area exceeds the upper limit value of the above range, a large amount of empty space is generated between the secondary particles formed by aggregation of the primary particles. When the specific surface area exceeds the lower limit value of the above range, the primary particles are too densely aggregated to form secondary particles.

In an exemplary embodiment, the positive electrode active material for a lithium secondary battery may be a lithium-nickel composite oxide satisfying the following Chemical Formula 1:

<Chemical Formula 1> $\quad\quad Li_x[Ni_yCo_zMn_wM_v]O_2$

wherein M is one or more selected from Ba, Ca, Zr, Ti, Mg, Ta, Nb, and Mo, $0.9 < x < 1.2$, $0.8 < y < 1$, $0 < z < 0.8$, $0 < w < 0.05$, and $0 \leq v \leq 0.2$.

According to still another exemplary embodiment of the present disclosure, a method of producing a positive electrode active material includes: injecting an aqueous solution containing a sodium or potassium-based material to form initial reaction conditions in a reactor; injecting a metal salt aqueous solution containing at least one or more of nickel, cobalt, and manganese, a complex ion forming agent, and a pH adjuster into the reactor to prepare a reaction solution; filtering the reaction solution to prepare a metal composite hydroxide; mixing the metal composite hydroxide and a lithium raw material to prepare a positive electrode active material precursor; and sintering the positive electrode active material precursor.

In the injecting of the aqueous solution containing the sodium or potassium-based material to form the initial reaction conditions in the reactor, as the sodium or potassium-based material, at least one of sodium sulfate ($Na_2SO_4$), sodium chlorate ($NaClO_3$), potassium sulfate ($K_2SO_4$), and potassium chlorate ($KClO_3$) may be included. For example, the sodium-based material may be sodium sulfate ($Na_2SO_4$).

In an exemplary embodiment, the aqueous solution containing the sodium or potassium-based material may contain the sodium or potassium-based material in an amount of 5 to 10 parts by weight with respect to 100 parts by weight of water. When the sodium or potassium-based material is contained in the range described above, there is an advantage in that the primary particles become thicker. When the value exceeds the upper limit value of the above range, the thickness of the primary particle increases significantly. When the value exceeds the lower limit value of the above range, the thickness of the primary particle decreases significantly.

As the initial reaction conditions are formed in the reactor using the sodium or potassium-based material, it may be confirmed that the primary particles tend to be thicker and larger when producing a positive electrode active material precursor, and in the case of the positive electrode active material produced using the sodium or potassium-based aqueous solution, it may be confirmed that the crystals of the material using sodium sulfate are more uniform and exhibit the form of a single crystal.

In the injecting of the metal salt aqueous solution containing at least one or more of nickel, cobalt, and manganese, the complex ion forming agent, and the pH adjuster into the reactor to prepare the reaction solution, the metal salt aqueous solution, the complex ion forming agent, and the pH adjuster may be injected in the above-described order at predetermined time intervals or may be injected simultaneously.

In the injecting of the metal salt aqueous solution containing at least one or more of nickel, cobalt, and manganese, the complex ion forming agent, and the pH adjuster into the reactor, the metal salt aqueous solution may be a material including acetate, nitrate, sulfate, halide, sulfide, hydroxide, oxide, or oxyhydroxide containing at least one of nickel, cobalt and manganese. As a non-limiting example, the metal salt aqueous solution containing nickel may be $Ni(OH)_2$, $NiO$, $NiOOH$, $NiCO_3\cdot2Ni(OH)_2\cdot4H_2O$, $NiC_2O_4\cdot2H_2O$, $Ni(NO_3)_2\cdot6H_2O$, $NiSO_4$, $NiSO_4\cdot6H_2O$, a fatty acid nickel salt, nickel halide, or a combination thereof.

As a non-limiting example, the metal salt aqueous solution containing cobalt may be $Co(OH)_2$, $CoOOH$, $Co(OCOCH_3)_2\cdot4H_2O$, $Co(NO_3)_2\cdot6H_2O$, $CoSO_4$, $Co(SO_4)_2\cdot7H_2O$, or a combination thereof. As a non-limiting example, the metal salt aqueous solution containing manganese may be $Mn_2O_3$, $MnO_2$, $Mn_3O_4$, $MnCO_3$, $Mn(NO_3)_2$, $MnSO_4$, manganese acetate, manganese dicarboxylate, manganese citrate, a fatty acid manganese salt, manganese oxyhydroxide, manganese chloride, or a combination thereof.

In the injecting of the metal salt aqueous solution containing at least one or more of nickel, cobalt, and manganese, the complex ion forming agent, and the pH adjuster into the reactor to prepare the reaction solution, the complex ion forming agent may form a complex with at least one ion of nickel, cobalt, and manganese.

**In** an exemplary embodiment, in the injecting of the metal salt aqueous solution containing at least one or more of nickel, cobalt, and manganese, the complex ion forming agent, and the **pH** adjuster into the reactor to prepare the reaction solution, a ratio of a flow rate of ammonia water to a flow rate of the metal salt aqueous solution may be 0.06 to 0.3. Specifically, the ratio of the flow rate of the ammonia water to the flow rate of the metal salt aqueous solution may be 0.1 to 0.2.

When the flow rate of the metal salt aqueous solution satisfies the above range, a positive electrode active material having a single particle shape may be produced. When the flow rate is outside the above range, a positive electrode active material having a single particle shape cannot be realized.

In an exemplary embodiment, in the injecting of the metal salt aqueous solution containing at least one or more of nickel, cobalt, and manganese, the complex ion forming agent, and the pH adjuster into the reactor to prepare the reaction solution, a pH in the reactor may be controlled to 10 to 12, and specifically, 10.5 to 11.5.

In an exemplary embodiment, the sintering of the positive electrode active material precursor may be performed at 750 to 1,100°C. Specifically, the sintering may be performed at 800 to 1,000°C, and more specifically, 780 to 950°C. When the sintering is performed in the above temperature range, the primary particles are grown thickly without nuclear aggregation, such that a positive electrode active material having a single particle shape may be produced.

**In** an exemplary embodiment, the sintering of the positive electrode active material precursor may be performed for 5 to 30 hours. Specifically, the sintering may be performed for 8 to 12 hours.

According to still another exemplary embodiment of the present disclosure, there is provided a lithium secondary battery including a positive electrode including the positive electrode active material described above; a negative electrode; and an electrolyte.

**The** positive electrode includes a current collector and a positive electrode active material layer positioned on the current collector. **The** positive electrode active material layer may include a positive electrode active material, and the positive electrode active material may include the above-described positive electrode active material for a lithium secondary battery according to an exemplary embodiment. In the positive electrode active material layer, a content of the positive electrode active material may be 90 wt% to 99 wt% with respect to the total weight of the positive electrode active material layer.

The positive electrode active material layer may further include a binder and/or a conductive material. In this case, a content of each of the binder and the conductive material may be 1 wt% to 5 wt% with respect to the total weight of the positive electrode active material.

The binder serves to attach positive electrode active material particles well to each other and also to attach the positive electrode active material to the current collector well. Representative examples of the binder include, but are not limited to, polyvinyl alcohol, carboxymethyl cellulose, hydroxypropyl cellulose, diacetyl cellulose, polyvinyl chloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, acrylated styrene-butadiene rubber, an epoxy resin, and nylon.

The conductive material is used for imparting conductivity to the electrode. Any electronic conductive material may be used as long as it does not cause chemical changes in a battery to be configured. Examples of the conductive material include a carbon-based material such as natural graphite, artificial graphite, carbon black, acetylene black, Ketjen black, or carbon fibers; a metallic material such as metal powder or metal fibers such as copper, nickel, aluminum, or silver; a conductive polymer such as a polyphenylene derivative; and a conductive material including a mixture thereof.

As the positive electrode current collector, an aluminum foil, a nickel foil, or a combination thereof may be used, but is not limited thereto.

The negative electrode includes a current collector and a negative electrode active material layer formed on the current collector, and the negative electrode active material layer includes a negative electrode active material.

The negative electrode active material includes a material capable of reversibly intercalating and deintercalating lithium ions, a lithium metal, a lithium metal alloy, a material capable of doping and dedoping lithium, or a transition metal oxide.

As the material capable of reversibly intercalating and deintercalating lithium ions, any carbon-based negative electrode active material that is generally used in a lithium ion secondary battery may be used as a carbon material, and representative examples thereof include crystalline carbon, amorphous carbon, and a combination thereof.

As the lithium metal alloy, an alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used.

Examples of the material capable of doping and dedoping lithium include Si, $SiO_x$ (0 < x < 2), a Si-Y alloy (Y is an element selected from the group consisting of an alkali metal, an alkaline earth metal, a group 13 element, a group 14 element, a transition metal, a rare earth element, and a combination thereof, but not Si), Sn, $SnO_2$, and Sn-Y (Y is an element selected from the group consisting of an alkali metal, an alkaline earth metal, a group 13 element, a group 14 element, a transition metal, a rare earth element, and a combination thereof, not Sn).

Examples of the transition metal oxide include vanadium oxide and lithium vanadium oxide. The negative electrode active material layer also includes a binder and may optionally further include a conductive material.

The binder serves to attach negative electrode active material particles well to each other and also to attach the negative electrode active material to the current collector well.

The conductive material is used for imparting conductivity to the electrode. Any electronic conductive material may be used as long as it does not cause chemical changes in a battery to be configured.

The current collector may be selected from the group consisting of a copper foil, a nickel foil, a stainless steel foil, a titanium foil, nickel foam, copper foam, a polymer substrate coated with a conductive metal, and a combination thereof.

The negative electrode and the positive electrode are manufactured by mixing the active materials, the conductive material, and the binder in a solvent to prepare active material compositions and applying the compositions to the current collectors, respectively. Since such an electrode manufacturing method is widely known in the art, a detailed description thereof will be omitted in the present specification. As the solvent, N-methylpyrrolidone and the like may be used, but are not limited thereto.

The electrolyte includes a non-aqueous organic solvent and a lithium salt.

The non-aqueous organic solvent serves as a medium through which ions involved in the electrochemical reaction of the battery may move.

The lithium salt is dissolved in the organic solvent, acts as a supply source of the lithium ions in the battery to allow a basic operation of the lithium secondary battery, and serves to promote movement of the lithium ions between the positive electrode and the negative electrode.

Depending on the type of lithium secondary battery, a separator may exist between the positive electrode and the negative electrode. As the separator, a polyethylene, polypropylene, or polyvinylidene fluoride layer or a multilayer film of two or more layers thereof may be used, and a mixed multilayer film such as a polyethylene/polypropylene double-layered separator, a polyethylene/polypropylene/polyethylene triple-layered separator, or a polypropylene/polyethylene/polypropylene triple-layered separator may also be used.

The lithium secondary battery may be classified into a lithium ion battery, a lithium ion polymer battery, and a lithium polymer battery depending on the types of separator and electrolyte used, may be classified into cylindrical, prismatic, coin, and pouch types depending on the shape thereof, and may be classified into a bulk type and a thin film type depending on the size thereof. The structures and manufacturing methods of these batteries are widely known in the art, and detailed descriptions will be omitted.

Hereinafter, preferred examples and comparative examples of the present disclosure will be described. However, each of the following examples is merely a preferred example of the present disclosure, and the present disclosure is not limited to the following examples.

### Method of Preparing Positive Electrode Active Material Precursor for Lithium Secondary Battery

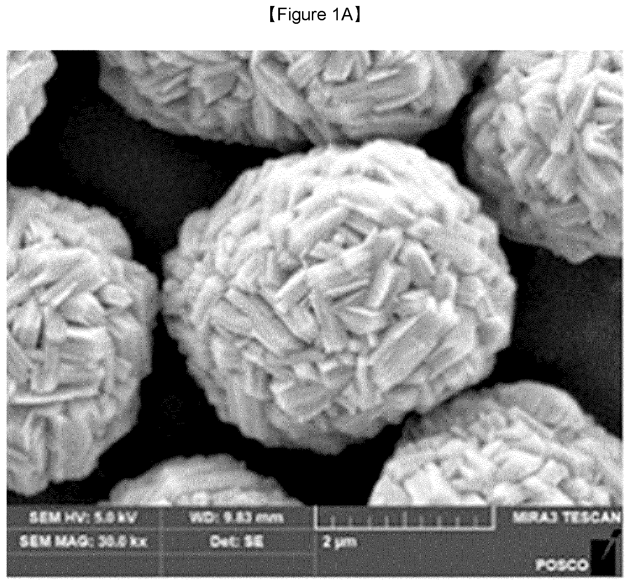

FIGS. 1A to 1C illustrate SEM photographs of positive electrode active material precursors according to examples and comparative examples of the present disclosure.

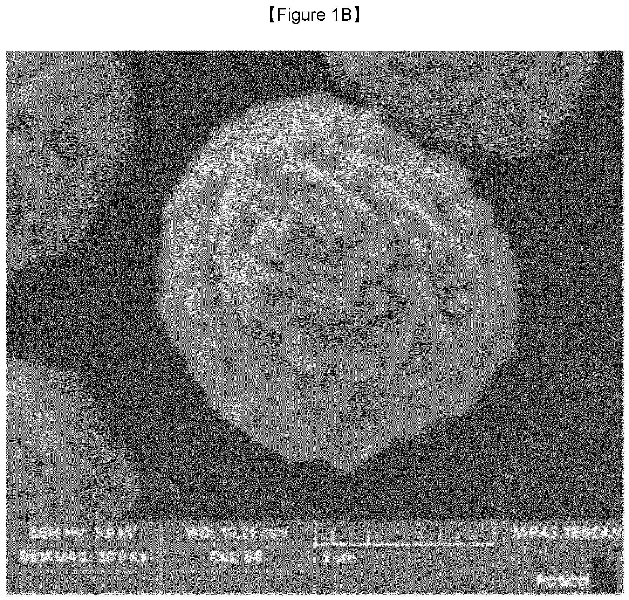

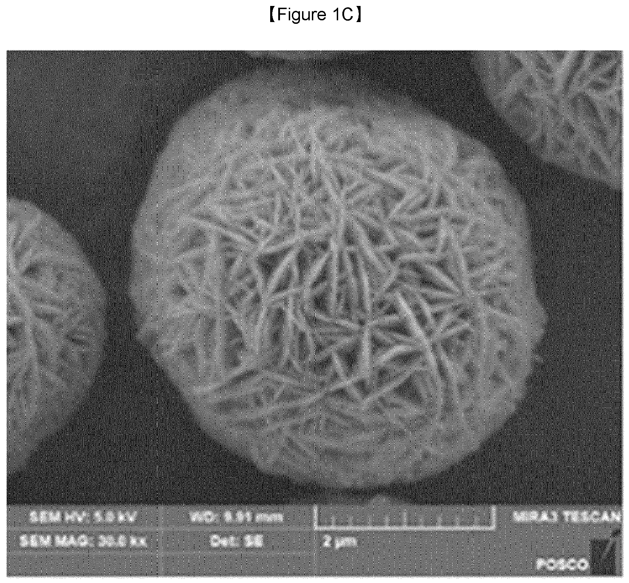

FIG. 1A, 1B, and 1C illustrate SEM photographs of positive electrode active material precursors prepared by Example 1, Example 2, and Comparative Example 1 described below, respectively. Referring to FIGS. 1A to 1C, it may be confirmed that the positive electrode active material precursors prepared by Examples 1 and 2 of the present disclosure tend to be thick and large.

### Example 1

Water was introduced into a 100 L batch reactor in an amount of 15% of the total volume of the reactor, and then sodium sulfate was introduced into the reactor in an amount of 5 parts by weight with respect to 100 parts by weight of water. Thereafter, the internal temperature was set to 30 to 50°C while stirring at a speed of 400 rpm, and nitrogen gas was introduced into the reactor to form an inert atmosphere. Thereafter, a 2.5 M metal sulfate aqueous solution in which nickel sulfate, cobalt sulfate, and manganese sulfate were mixed in a molar ratio of 0.8:0.1:0.1, and 25% sodium hydroxide, and 28% ammonia water were prepared.

A flow rate of the metal sulfate aqueous solution was controlled to 3 L/hr, a flow rate of the ammonia water was controlled to a ratio of 0.1 relative to the flow rate of the metal sulfate aqueous solution, and the amount of sodium hydroxide (NaOH) solution introduced was controlled so that a hydrogen ion concentration (pH) in the reactor was about 11.0 to 12.0.

Thereafter, a reactant was introduced so that a stirring speed was 500 rpm and an average residence time of the entire solution was 20 hours, a reaction temperature was maintained at 40 to 70°C, nitrogen gas was introduced, and then, the inert atmosphere was maintained. After the reaction was completed, the formed solution was washed and solid-liquid separated using a filter press, and the remaining moisture was removed using high-pressure fresh air. The solid-liquid separated active material was dried at 100 to 200°C using a fluidized bed dryer.

Lithium hydroxide was mixed with the hydroxide particles obtained by the above-described method so that an equivalent ratio relative to the hydroxide was 1.05, thereby preparing a positive electrode active material precursor.

### Example 2

Water was introduced into a 100 L batch reactor in an amount of 15% of the total volume of the reactor, and then sodium sulfate was introduced into the reactor in an amount of 10 parts by weight with respect to 100 parts by weight of water. Thereafter, the internal temperature was set to 30 to 50°C while stirring at a speed of 400 rpm, and nitrogen gas was introduced into the reactor to form an inert atmosphere. Thereafter, a 2.5 M metal sulfate aqueous solution in which nickel sulfate, cobalt sulfate, and manganese sulfate were mixed in a molar ratio of 0.8:0.1:0.1, and 25% sodium hydroxide, and 28% ammonia water were prepared.

A flow rate of the metal sulfate aqueous solution was controlled to 3 L/hr, a flow rate of the ammonia water was controlled to a ratio of 0.2 relative to the flow rate of the metal sulfate aqueous solution, and the amount of sodium hydroxide (NaOH) solution introduced was controlled so that a hydrogen ion concentration (pH) in the reactor was about 11.5 to 12.5.

Thereafter, a reactant was introduced so that a stirring speed was 400 rpm and an average residence time of the entire solution was 20 hours, a reaction temperature was maintained at 40 to 70°C, nitrogen gas was introduced, and then, the inert atmosphere was maintained. After the reaction was completed, the formed solution was washed and solid-liquid separated using a filter press, and the remaining moisture was removed using high-pressure fresh air. The solid-liquid separated active material was dried at 100 to 200°C using a fluidized bed dryer.

Lithium hydroxide was mixed with the hydroxide particles obtained by the above-described method so that an equivalent ratio relative to the hydroxide was 1.05, thereby preparing a positive electrode active material precursor.

### Comparative Example 1

The same procedure as that of Example 1 was performed, except that water was introduced into the 100 L batch reactor in an amount of 15% with respect to the total volume of the reactor and sodium sulfate was not additionally introduced.

### Evaluation Examples - Characteristics of Precursor

Table 1 shows XRD characteristics and single crystals of the precursors according to Examples 1 and 2 and Comparative Example 1.

The XRD characteristics were measured using SMARTLAB equipment available from Rigaku Corporation.

[Table 1]

| Experimental Example | XRD characteristics | | | | | | | | | | | | | | | Particle diameter characteristics | | | |
|---|---|---|---|---|---|---|---|---|---|---|---|---|---|---|---|---|---|---|---|
| | $I_{001}I_{100}$ | $I_{001}/I_{101}$ | $I_{001}/I_{102}$ | $I_{001}/I_{110}$ | $I_{001}/I_{111}$ | $I_{100}/I_{001}$ | $I_{100}/I_{101}$ | $I_{100}/I_{102}$ | $I_{100}/I_{110}$ | $I_{100}/I_{111}$ | Full width at half maximum | | | | | D10 | D50 | D90 | Span |
| | | | | | | | | | | | 001 plane | 100 plane | 101 plane | 102 plane | 110 plane | | | | |
| | - | - | - | - | - | - | - | - | - | - | ○ | ○ | ○ | ○ | ○ | μm | μm | μm | |
| Example 1 | 4.4 | 1.5 | 4.9 | 10.3 | 13.0 | 0.23 | 0.34 | 1.13 | 2.37 | 2.98 | 0.27 | 0.34 | 0.37 | 0.56 | 0.66 | 2.86 | 3.82 | 5.41 | 0.67 |
| Example 2 | 2.3 | 1.8 | 6.7 | 4.2 | 7.4 | 0.44 | 0.78 | 2.95 | 1.83 | 3.28 | 0.42 | 0.21 | 0.55 | 1.03 | 0.33 | 3.09 . | 4.06 | 5.58 | 0.61 |
| Comparative Example 1 | 0.3 | 0.5 | 2.4 | 1.1 | 1.7 | 3.11 | 1.56 | 7.40 | 3.30 | 5.31 | 3.13 | 2.89 | 0.35 | 2.11 | 3.15 | 3.18. | 4.5 | 6.68 | 0.78 |

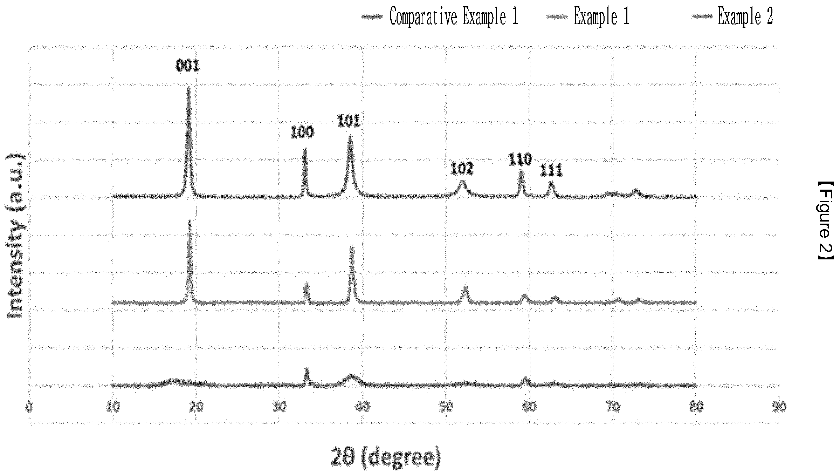

FIG. 2 illustrates XRD peak intensity values according to examples and comparative examples of the present disclosure.

Referring to FIG. 2, it may be confirmed that the resulting values of Examples 1 and 2 are included in the XRD peak intensity value range of the present disclosure, whereas the resulting value of Comparative Example 1 is not included in the XRD peak intensity value range of the present disclosure.

**Examples 3 and 4 and Comparative Example 2- Positive Electrode Active Material**

The positive electrode active material precursors formed by Examples 1 and 2 and Comparative Example 1 were heated at a heating rate of 2.5 °C/min in an oxygen atmosphere and then sintered at 780°C for 9 hours, thereby producing lithium composite metal oxides having a uniform single crystal structure.

**Evaluation Examples - Particle Surface Analysis of Positive Electrode Active Material for Lithium Battery Having Single Crystal Structure and Coin Cell Evaluation**

Table 2 shows particles surface analysis and coin cell evaluation according to the content of the complex ion forming agent according to each of Examples 3 and 4 and Comparative Example 2.

For the coin cell evaluation, a coin cell type (CR2032) half cell (coin cell) was assembled in a moisture-controlled dry room, and after cell assembly, the coin cell was aged at room temperature for 2 hours to achieve electrolyte impregnation and electrochemical equilibrium.

The coin cell was evaluated using a TOSCAT-3100 cycler. First, formation was performed by charging and discharging the coin cell for one cycle by applying a current density of 0.1 C in a voltage range of 2.5 V to 4.25 V, and then charging and discharging the coin cell by applying a current density of 0.3 C in the same voltage range. The initial discharge capacity and Coulombic efficiency (C efficiency) in the formation, and the capacity retention rate during the evaluation at a high temperature as a high-temperature capacity retention rate are shown in the following table.

[Table 2]

| Experimental Example | Complexing agent | | [Ammonia water flow rate]/[metal salt aqueous solution flow rate] ratio | LiOH [ppm] | Li$_2$CO$_3$ [ppm] | LiOH/Li$_2$CO$_3$ | 0.1 C discharge capacity at room temperature [mAh/g] | 0.1 C efficiency at room temperature [%] | High-temperature capacity retention rate [after 30 cycles/%] |
|---|---|---|---|---|---|---|---|---|---|
| | Water [parts by weight] | Complex ion forming agent content [parts by weight] | | | | | | | |
| Example 3 | 100 | 5 | 0.1 | 2000 | 1800 | 1.11 | 204.22 | 89.3 | 96.2 |
| Example 4 | 100 | 10 | 0.2 | 1400 | 800 | 1.75 | 205.64 | 89.9 | 96.7 |
| Comparative Example 2 | | - | 0.05 | 4200 | 2100 | 2.00 | 20.34 | 88.9 | 95.8 |

FIGS. 3A to 3C illustrate SEM photographs obtained by imaging positive electrode active materials for a lithium secondary battery according to examples and comparative examples of the present disclosure.

FIGS. 3A to 3C show the positive electrode active materials of Example 3, Example 4, and Comparative Example 2, respectively, and it may be confirmed that a more uniform single crystal form is exhibited in Examples 3 and 4 compared to Comparative Example 2.

FIG. 4A and 4B are graphs showing capacity characteristics and lifespan characteristics of the positive electrode active materials for a lithium secondary battery according to examples and comparative examples of the present disclosure.

According to FIGS. 4A and 4B, it may be confirmed that the positive electrode active materials of Examples 3 and 4 have more excellent capacity characteristics and lifespan characteristics compared to Comparative Example 2.

### Evaluation Examples - Properties of Sodium Sulfate as Complex Ion Forming Agent

FIG. 5 illustrates an SEM photograph of an active material precursor for a lithium secondary battery prepared by adding ammonium sulfate in a comparative example of the present disclosure.

FIG. 5 illustrates an SEM photograph of an active material precursor for a lithium secondary battery prepared by adding ammonium sulfate to a reactor. FIGS. 1A and 1B are SEM photographs of the positive electrode active material precursors prepared using sodium sulfate as an initial reaction condition, and FIG. 5 is an SEM photograph of the positive electrode active material precursor prepared using sodium sulfate as an initial reaction condition.

Referring to FIGS. 1A, 1B, and 5, it may be confirmed that the primary particles of FIGS. 1A and **1B,** which are the precursors prepared by adding sodium sulfate, tend to be thicker and larger than the precursor of FIG. 5 prepared by adding ammonium sulfate. **In** addition, it may be confirmed that it is preferable to use sodium sulfate as one of the initial reaction conditions rather than ammonium sulfate, as the crystals of the material using sodium sulfate are more uniform and show the form of a single crystal.

Although the preferred exemplary examples have been described in detail above, the scope of the present disclosure is not limited thereto, and various alternations and modifications by those skilled in the art using the basic concept defined in the following claims also fall within the scope of the present disclosure.

### Claims

1. A positive electrode active material precursor, wherein the positive electrode active material precursor satisfies, in XRD peak values, at least one of an $I_{001}/I_{100}$ ratio of 0.5 to 6, an $I_{001}/I_{101}$ ratio of 0.6 to 3, an $I_{001}/I_{102}$ ratio of 2.5 to 8, an $I_{001}/I_{110}$ ratio of 1.5 to 11, an $I_{001}/I_{111}$ ratio of 2 to 14, an $I_{100}/I_{001}$ ratio of 0.1 to 3.1, an $I_{100}/I_{101}$ ratio of 0.1 to 1.5, an $I_{100}/I_{102}$ ratio of 1.0 to 7.3, an $I_{100}/I_{110}$ ratio of 1.5 to 3.2, and an $I_{100}/I_{111}$ ratio of 2.5 to 5.3, and
in the XRD peak values, $I_{001}$ is a peak value satisfying a range of $18.5 \pm 1.0°$, $I_{100}$ is a peak value satisfying a range of $33.0 \pm 1.0°$, $I_{101}$ is a peak value satisfying a range of $38.5 \pm 1.5°$, $I_{102}$ is a peak value satisfying a range of $52.5 \pm 1.5°$, $I_{110}$ is a peak value satisfying a range of $59 \pm 1.5°$, and $I_{111}$ is a peak value satisfying a range of $63 \pm 1.0°$.

2. The positive electrode active material precursor of claim 1, wherein:
the positive electrode active material precursor satisfies at least one of a full width at half maximum (FWHM) of a diffraction peak on a (001) plane of 0.1 to 3.0, a full width at half maximum of a diffraction peak on a (100) plane of 0.1 to 2.8, a full width at half maximum of a diffraction peak on a (101) plane of 0.36 to 1.0, a full width at half maximum of a diffraction peak on a (102) plane of 0.1 to 2.0, and a full width at half maximum of a diffraction peak on a (110) plane of 0.1 to 3.0.

3. The positive electrode active material precursor of claim 1, wherein:
the positive electrode active material precursor has a structure in which at least one or more layers of a transition metal layer and an oxygen layer are stacked.

4. The positive electrode active material precursor of claim 3, wherein:
the transition metal layer and the oxygen layer form a stacked aggregate through hydrogen bonds.

5. The positive electrode active material precursor of claim 4, wherein:

the positive electrode active material precursor includes at least one or more primary particles, and
a lattice constant value of a c-axis of the primary particle is 300 nm to 700 nm.

6. A positive electrode active material comprising at least one or more positive electrode active material precursors having hydrogen bonds in a <001> direction,
   wherein the positive electrode active material is a single particle containing, by wt%, 500 to 2,000 ppm of $Li_2CO_3$.

7. The positive electrode active material of claim 6, wherein:

   the positive electrode active material contains LiOH, and
   LiOH and $Li_2CO_3$ satisfy the following Expression 1:

   <Expression 1>

   $$0.5 \leq [LiOH]/[Li_2CO_3] \leq 1.9$$

   wherein [LiOH] represents a content of LiOH and $[Li_2CO_3]$ represents a content of $Li_2CO_3$.

8. The positive electrode active material of claim 6, wherein:
   LiOH is contained in an amount of 1,000 to 4,000 ppm in terms of wt%.

9. The positive electrode active material of claim 6, wherein:
   an average particle diameter (D50) of the positive electrode active material is 2 to 20 $\mu$m.

10. The positive electrode active material of claim 6, wherein:
    a specific surface area of the positive electrode active material is 1 to 30 $m^2/g$.

11. The positive electrode active material of claim 6, wherein:

    the positive electrode active material is a lithium-nickel composite oxide represented by the following Chemical Formula 1:

    <Chemical Formula 1>          $Li_x[Ni_yCo_zMn_wM_v]O_2$

    wherein M is one or more selected from Ba, Ca, Zr, Ti, Mg, Ta, Nb, and Mo, $0.9 < x < 1.2$, $0.8 < y < 1$, $0 < z < 0.8$, $0 < w < 0.05$, and $0 \leq v \leq 0.2$.

12. A method of producing a positive electrode active material, the method comprising:

    injecting an aqueous solution containing a sodium or potassium-based material to form initial reaction conditions in a reactor,
    injecting a metal salt aqueous solution containing at least one or more of nickel, cobalt, and manganese, a complex ion forming agent, and a pH adjuster into the reactor to prepare a reaction solution;
    filtering the reaction solution to prepare a metal composite hydroxide;
    mixing the metal composite hydroxide and a lithium raw material to prepare a positive electrode active material precursor; and
    sintering the positive electrode active material precursor,
    wherein the aqueous solution containing the sodium or potassium-based material contains the sodium or potassium-based material in an amount of 5 to 10 parts by weight with respect to 100 parts by weight of water.

13. The method of claim 12, wherein:
    the sodium or potassium-based material includes at least one of sodium sulfate, sodium chlorate, potassium chlorate, and potassium sulfate.

14. The method of claim 12, wherein:

    in the injecting of the metal salt aqueous solution containing at least one or more of nickel, cobalt, and manganese, the complex ion forming agent, and the pH adjuster into the reactor,
    a ratio of a flow rate of ammonia water to a flow rate of the metal salt aqueous solution is 0.06 to 0.3.

**15.** The method of claim 14, wherein:
the flow rate of the metal salt aqueous solution is 2.5 to 3.5 L/hr.

**16.** The method of claim 12, wherein:
the sintering is performed at 750 to 1,100°C.

**17.** The method of claim 12, wherein:
the sintering is performed for 5 to 30 hours.

**18.** The method of claim 12, wherein:
in the injecting of the metal salt aqueous solution containing at least one or more of nickel, cobalt, and manganese, the complex ion forming agent, and the pH adjuster into the reactor, a pH in the reactor is controlled to 10 to 12.

【Figure 1A】

【Figure 1B】

【Figure 1C】

【Figure 2】

【Figure 3A】

【Figure 3B】

【Figure 3C】

【Figure 4A】

【Figure 4B】

【Figure 5】

## INTERNATIONAL SEARCH REPORT

| International application No. |
|---|
| **PCT/KR2023/012070** |

### A. CLASSIFICATION OF SUBJECT MATTER

**C01G 53/00**(2006.01)i; **H01M 4/505**(2010.01)i; **H01M 4/525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

C01G 53/00(2006.01); H01M 10/052(2010.01); H01M 10/0525(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극활물질(positive active material), 전구체(precursor), 금속염(metal salt), X-선 회절(XRD), 리튬이차전지(lithium secondary battery)

### C. DOCUMENTS CONSIDERED TO BE RELEVANT

| Category* | Citation of document, with indication, where appropriate, of the relevant passages | Relevant to claim No. |
|---|---|---|
| X | KR 10-1883406 B1 (RESEARCH INSTITUTE OF INDUSTRIAL SCIENCE & TECHNOLOGY) 30 July 2018 (2018-07-30)<br>See claims 11, 15, 16, 20, 26, 27 and 36, and paragraphs [0013]-[0017] and [0062]-[0142]. | 1-18 |
| A | KR 10-2015-0078672 A (SAMSUNG FINE CHEMICALS CO., LTD.) 08 July 2015 (2015-07-08)<br>See claims 1-10. | 1-18 |
| A | JP 2022-528940 A (BASF SE) 16 June 2022 (2022-06-16)<br>See claims 1-22. | 1-18 |
| A | KR 10-2012-0084585 A (IUCF-HYU (INDUSTRY-UNIVERSITY COOPERATION FOUNDATION HANYANG UNIVERSITY)) 30 July 2012 (2012-07-30)<br>See claims 1-11. | 1-18 |
| A | KR 10-2022-0072178 A (POSCO CHEMICAL CO., LTD.) 02 June 2022 (2022-06-02)<br>See claims 1-9. | 1-18 |

☐ Further documents are listed in the continuation of Box C.　　☑ See patent family annex.

| | | |
|---|---|---|
| * | Special categories of cited documents: | |
| "A" | document defining the general state of the art which is not considered to be of particular relevance | "T" |
| "D" | document cited by the applicant in the international application | |
| "E" | earlier application or patent but published on or after the international filing date | "X" |
| "L" | document which may throw doubts on priority claim(s) or which is cited to establish the publication date of another citation or other special reason (as specified) | "Y" |
| "O" | document referring to an oral disclosure, use, exhibition or other means | |
| "P" | document published prior to the international filing date but later than the priority date claimed | "&" |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **15 November 2023** | **15 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/012070**

| Patent document cited in search report | | | Publication date (day/month/year) | Patent family member(s) | | | Publication date (day/month/year) |
|---|---|---|---|---|---|---|---|
| KR | 10-1883406 | B1 | 30 July 2018 | None | | | |
| KR | 10-2015-0078672 | A | 08 July 2015 | None | | | |
| JP | 2022-528940 | A | 16 June 2022 | CA | 3132425 | A1 | 15 October 2020 |
| | | | | CN | 113631517 | A | 09 November 2021 |
| | | | | EP | 3953305 | A1 | 16 February 2022 |
| | | | | KR | 10-2021-0145761 | A | 02 December 2021 |
| | | | | US | 2022-0194814 | A1 | 23 June 2022 |
| | | | | WO | 2020-207901 | A1 | 15 October 2020 |
| KR | 10-2012-0084585 | A | 30 July 2012 | KR | 10-1802517 | B1 | 02 December 2021 |
| KR | 10-2022-0072178 | A | 02 June 2022 | CA | 3199811 | A1 | 02 June 2022 |
| | | | | CN | 116490996 | A | 25 July 2023 |
| | | | | EP | 4254558 | A1 | 04 October 2023 |
| | | | | WO | 2022-114718 | A1 | 02 June 2022 |

Form PCT/ISA/210 (patent family annex) (July 2022)